# EUROPEAN PATENT SPECIFICATION

(11) **EP 3 106 726 B1**
(45) Date of publication and mention of the grant of the patent: **27.11.2019**
(21) Application number: 15172074.5
(22) Date of filing: 15.06.2015
(51) Int. Cl.: F16K 31/40, F16K 1/12

(54) **AXIAL VALVE**
AXIALVENTIL
SOUPAPE AXIALE

(43) Date of publication of application: 21.12.2016
(73) Proprietor: Danfoss A/S, 6430 Nordborg (DK)
(72) Inventor: BIRKELUND, Michael, 5500 Middelfart (DK); KOBBERØ ANDERSEN, Ejner, 6430 Nordborg (DK); VAN BEEK, Johan, 6051 Almind (DK)

(56) References cited:
- GB-A- 832 537
- US-B1- 6 994 308

## Description

The invention relates to an axial valve comprising a housing, an inlet, an outlet, a main valve and a pilot valve, wherein the opening and closing of the main valve is controlled by actuating the pilot valve, wherein the pilot valve comprises a pilot valve element and an armature, and wherein the main valve comprises a main closing element, wherein the pilot valve element is arranged displaceable inside the armature and the armature's relative position to the main closing element is fixed.

Such an axial valve is known from US 6 994 308 B1 or GB 832 537 A.

A further axial valve of the above mentioned kind is for example known from EP 1 416 208 A1. Therein a main valve with a main closing element is arranged in line and coaxially to a direction from the inlet to the outlet. A pilot valve is arranged in a protrusion of a valve housing displaced from the main flow path. The pilot valve may be actuated in a direction perpendicular to the main flow path. By actuating the pilot valve element, the pressure in a pressure chamber neighboring the main closing element may be reduced. Thereby the main closing element is displaced by a force resulting from the pressure differences to open the main valve.

A further valve of the above type is known from EP 0 763 683 A1. Again a magnetic pilot valve is used to indirectly open a main valve. Between a main closing element and the pilot valve element a piston is arranged, with a larger front face towards the pilot valve. When the pilot valve is activated, a pilot valve element is displaced away from the front face of the piston, whereby a pressure force on the piston is increased. Consequently, the piston is displaced together with the main closing element to open the main valve. The distance between the piston and a valve element anchor is kept constant by an axial pin.

The above valves use a pilot valve for indirect control since they are typically used for high pressure fluid applications. Consequently, a direct control of the main valve would be difficult, since high pressure forces would have to be overcome directly resulting in a high power demand and an often unreliable closing/opening behavior.

Piloted valves, however, often have a rather complicated construction geometry and require a lot of material. This increases the costs of such valves. Furthermore, piloted valves in the state of the art are rather bulky, since the pilot valve is usually attached to a side of the housing as in EP 0 763 683 A1 and EP 1 416 208 A1.

The task of the present invention is therefore to provide a piloted axial valve with a simpler and more compact construction.

The above task is solved in that the housing is formed from deep drawn sheet metal parts.

With this solution, the construction can be made much more compact requiring less material and space. The pilot valve element can be received slideably inside the armature. The armature can move in unison with the main closing element. The resting position of the pilot valve element when the pilot valve is deactivated can thus move together with the main closing element and is fixed relative to the main closing element. The armature may also be attached to the main closing element. Using deep drawn sheet metal parts allows for a cost efficient and high quality construction of the axial valve. One may also produce the armature tube, the anchor tube as well as an inlet part and an outlet part from deep drawn sheet metal parts.

In a preferred embodiment both the main valve and the pilot valve have parallel opening directions. The main closing element and the pilot valve element can move parallel or even coaxially when one of them opens or closes.

It is furthermore preferred if both the main valve and the pilot valve have opening directions parallel to a central axis of the housing leading from inlet to outlet. This solution allows for a very compact in-line construction of both the main valve and the pilot valve. Furthermore, unwanted vibrations and transversal forces on the axial valve during operation can be minimized.

In a further preferred embodiment the pilot valve element is arranged displaceable in an armature tube of the armature and one end of the armature tube is attached to the main closing element. Thus, all moving parts of the pilot valve can be connected to the main closing element, in particular the armature tube and the pilot valve element. This further simplifies the construction.

It is preferred if a pilot valve seat is arranged in the main closing element. To this end the main closing element may comprise a central orifice that is closed when the pilot valve element engages the pilot valve seat arranged on one end of the orifice. This solution reduces the number of necessary parts and allows for a more compact axial valve.

In a further preferred embodiment the main flow paths of the axial valve from inlet to outlet are located in a radial direction between the housing and the armature. A radial direction here refers to the directions perpendicular to a central axis of the axial valve from inlet to outlet. The fluid flows in the open state of the main valve through main flow paths arranged between the armature and the housing. The fluid can flow around the armature and the pilot valve element and preferably also around the main closing element.

In a further preferred embodiment the pilot valve is a magnetic valve comprising a coil. Preferably, the coil is arranged coaxially around a central axis of the axial valve leading from inlet to outlet.

It is preferred if the coil is arranged radially inside the main flow paths of the axial valve. Thus, the pilot valve can be completely arranged inside the housing reducing the necessary volume of the axial valve. The main flow of fluid in the open state of the main valve will flow around the pilot valve. Since the pilot valve in this case can be constructed rather compact, a larger amount of the cross-section of the axial valve can be used for the main flow paths of the fluid. Consequently, a large opening fluid flow through the axial valve is achieved. Furthermore, this solution allows preventing moisture ingress into the coil from the outside air. This reduces the risk of valve failure due to a burned coil. Additionally, the coil is cooled by the fluid during operation because of the reduced distance to the fluid flow paths.

Preferably, the relative position of the coil to the main closing element is fixed. This way the coil may move in unison with the main closing element. The pilot valve element may in this case be arranged slideable inside a coil casing of the coil.

Alternatively, it is preferred if the coil is arranged radially outside the main flow paths of the axial valve. Thus, in this embodiment the main flow paths of the fluid can be arranged radially between the coil and the pilot valve element. With this solution, the construction is particularly simple, but it may require providing means of guiding the magnetic flux from the coil to the pilot valve element.

It is preferred if the axial valve comprises at least one magnetic flux conductor between the coil and the pilot valve element. In particular, it is preferred if the axial valve comprises two magnetic flux conductors arranged on each axial end of the coil. The magnetic flux conductor can be arranged between the pilot valve element and the coil in a radial direction to guide the magnetic flux from the coil to the pilot valve element and back.

It is preferred if the magnetic flux conductor comprises a plurality of fluid flow paths. With this solution the magnetic flux will not be guided through the magnetic flux conductor in a rotationally symmetric fashion but the magnetic flux conductor can comprise axial extensions for guiding the magnetic flux. The main fluid flow paths can be arranged between the axial extension in a circular arrangement.

Preferably, the axial valve comprises an anchor member that is fixed to the housing, wherein the main closing element is arranged slideable inside the anchor member. Thus, the armature, in which the pilot valve element is received, may move together with the main closing element inside the anchor member.

It is furthermore preferred if the anchor member comprises an anchor tube, wherein the main closing element is slideable arranged inside the anchor tube. In this case, the main flow paths of the axial valve may be arranged outside the anchor tube to flow around the main valve as well as the pilot valve.

Preferred embodiments of the invention will in the following be described with reference to the figures, wherein:
- Fig. 1: shows a first embodiment of an axial valve according to the invention with a closed pilot valve and a closed main valve,
- Fig. 2: shows the axial valve according to figure 1 with an open pilot valve but a closed main valve,
- Fig. 3: shows the axial valve according to figures 1 and 2 with both an open pilot valve and an open main valve,
- Fig. 4: shows the axial valve according to figures 1 to 3 with a closed pilot valve and an open main valve,
- Fig. 5: shows a second embodiment of an axial valve according to the invention,
- Fig. 6 and 7: show a magnetic flux conductor used in the embodiment according to figure 5,
- Fig. 8: shows a third embodiment of an axial valve according to the invention,
- Fig. 9/10: show a fourth embodiment of an axial valve according to the invention.

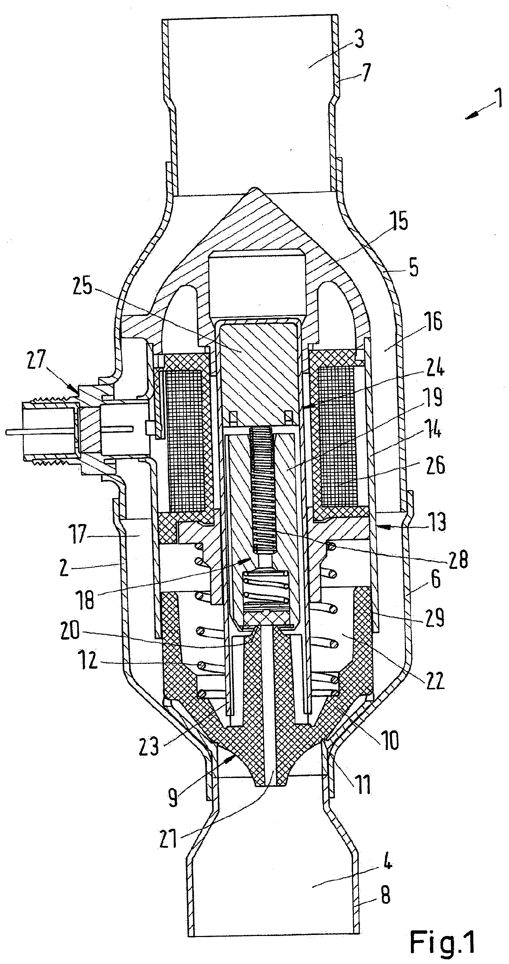

In figures 1 to 4 a first embodiment of an axial valve 1 according to the invention is shown. The axial valve 1 comprises a housing 2, an inlet 3 as well as an outlet 4. The housing 2 comprises two housing parts 5, 6, which are preferably made from deep drawn metal sheet parts. The inlet 3 is arranged in an inlet part 7, which is also preferably made from a deep drawn sheet metal part. Similarly, the outlet 4 is arranged in an outlet part 8, which is preferably made from a deep drawn metal sheet part.

The axial valve 1 comprises a main valve 9 with a main closing element 10. In the closed position of the main valve 9 the main closing element 10 rests against a main valve seat 11. A main valve spring 12 urges the main closing element 10 towards the main valve seat 11. The main valve spring 12 on the other hand rests against an anchor member 13 arranged in the housing 2.

The anchor member 13 furthermore comprises an anchor tube 14 as well as an anchor end 15. The main closing element 10 is displaceably received inside the anchor tube 14. The anchor member 13 may be connected to the housing 2 at either/or both of the anchor end 15 and the anchor tube 14. Between the anchor member 13 and the housing 2 main flow paths 16, 17 are arranged, through which the fluid can flow when the main valve 9 is in an open position.

The axial valve 1 furthermore comprises a pilot valve 18. The pilot valve 18 comprises a pilot valve element 19 as well as a pilot valve seat 20. The pilot valve seat 20 is arranged in the main closing element 10. The pilot valve seat 20 is arranged at the end of an orifice 21 in the main closing element 10 leading from the outlet 4 to a pressure chamber 22.

The pilot valve element 19 is received slideably inside an armature tube 23 of an armature 24. The armature 24 furthermore comprises an armature anchor 25 arranged at an end of the armature tube 23 facing away from the main closing element 10. The armature tube 23 is fixed to the main closing element 10 of the main valve 9. When the main closing element 10 moves, the armature 24 together with the armature tube 23 and the pilot valve element 19 therefore is also moved by the same distance. However, the pilot valve element 19 may also be actively displaced by providing an electric current to a coil 26 of the pilot valve 18. To this end a connector 27 is attached to the housing 2 and connected to the coil 26. When the coil 26 is provided with a current, the pilot valve element 19 is displaced against the force of a pilot valve spring 28 away from the pilot valve seat 20.

As shown in figure 1 the main closing element 10 rests against the main valve seat 11 and the pilot valve element 19 rests against the pilot valve seat 20. Consequently, in this situation both the pilot valve 18 as well as the main valve 9 are fully closed. Here the main closing element 10 is forced against the main valve seat 11 by the forces of both the main valve spring 12 as well as a pressure force resulting from a higher pressure in the pressure chamber 22 as well as in the main flow paths 16, 17 as compared to the outlet 4. The pressure inside the pressure chamber 22 is in this situation higher than the pressure at the outlet 4 because there is at least one bleed hole 29 arranged between the main closing element 10 and the anchor member 13, in this case the anchor tube 14. The cross-section of the bleed whole 29 is, however, relatively small. The axial valve 1 is in this embodiment a normally closed valve.

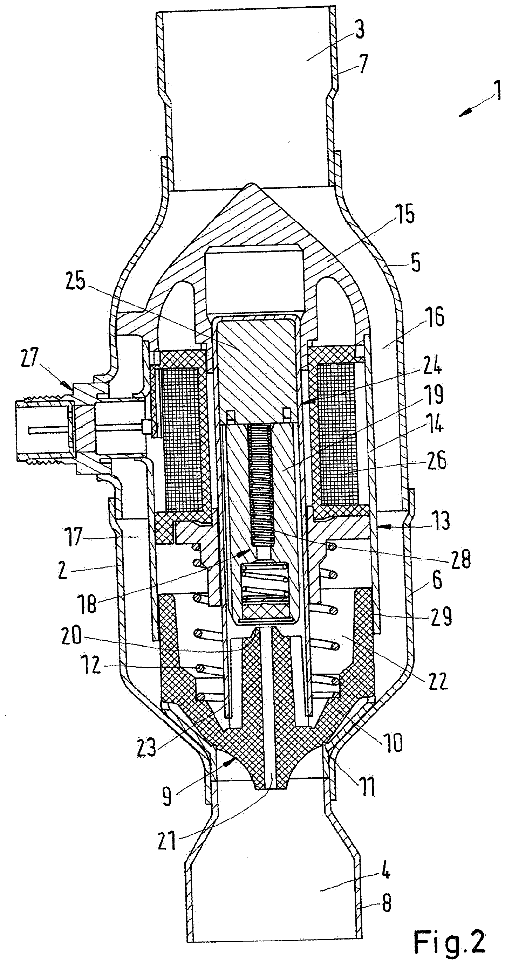

If now as shown in figure 2 the coil 26 is provided with an electric current, the pilot valve element 19 is displaced away from the pilot valve seat 20. Thereby, a fluid connection between the outlet 4 and the pressure chamber 22 is opened and the pressure in the pressure chamber 22 drops as compared to the situation in figure 1.

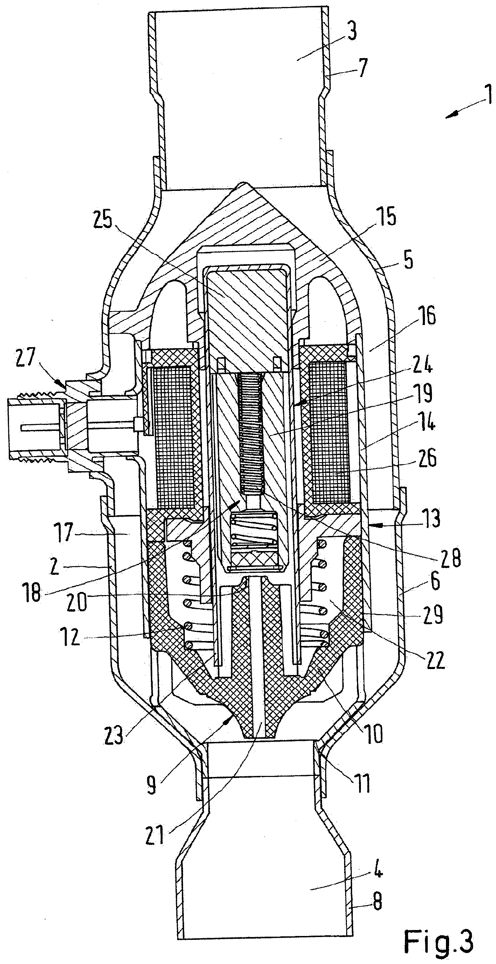

Consequently, the pressure force acting on the main closing element 10 from the side of the pressure chamber 22 is reduced, whereby the net pressure force acting on the main closing element in a direction away from the main valve seat 11 becomes larger than the force of the main valve spring 12. Thereby the main closing element 10 is lifted from the main valve seat 11 as shown in figure 3. Thus, the main flow paths 16, 17 are opened and the fluid can flow from the inlet 3 to the outlet 4.

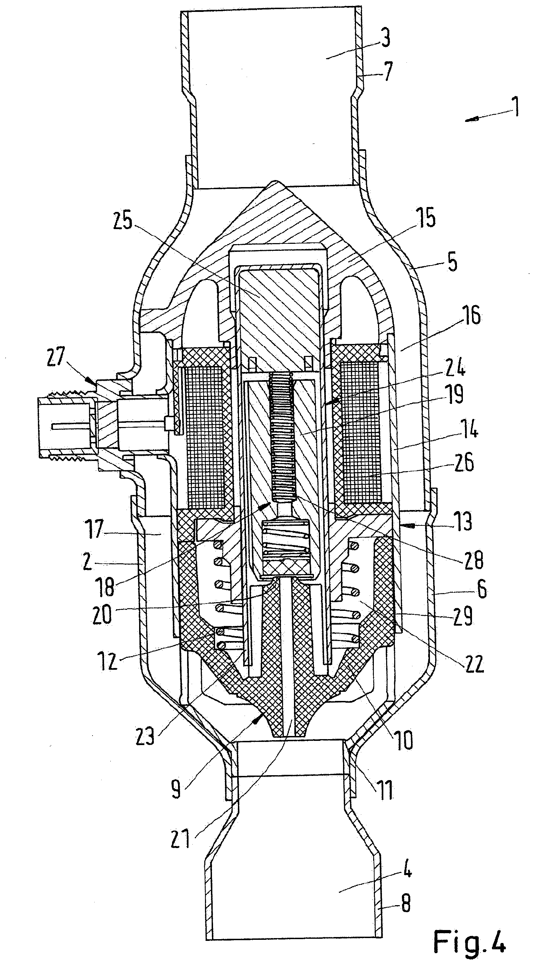

If now as shown in figure 4 the pilot valve 18 is closed by deactivating the current to the coil 26, the pressure in the pressure chamber 22 will rise again as compared to the situation in figures 2 and 3. Consequently, the combined force of the main valve spring 12, the pilot valve spring 28 and the pressure forces acting on the main closing element 10 will lead to a net force urging the main closing element 10 towards the main valve seat 11 to close the main valve 9.

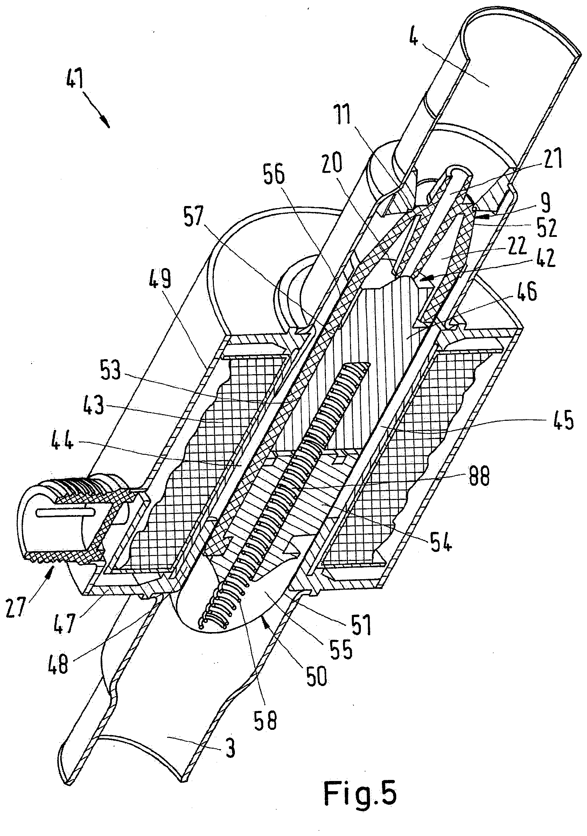

Figure 5 shows a second embodiment of an axial valve according to the invention. Corresponding features are denoted with the same reference signs as in the first embodiment. As in the previous embodiment a main valve 9 is opened or closed by actuating a pilot valve 42. In contrast to the embodiment according to figures 1 to 4, the axial valve 41 here comprises a pilot valve 42 with a coil 43 that is arranged radially outside the main flow paths 44, 45 of the axial valve 41. According to the situation in figure 5 the main closing element 52 of the main valve 9 is in a closed position and therefore engages the main valve seat 11. The pilot valve element 46 is also in a closed position and engages the pilot valve seat 20.

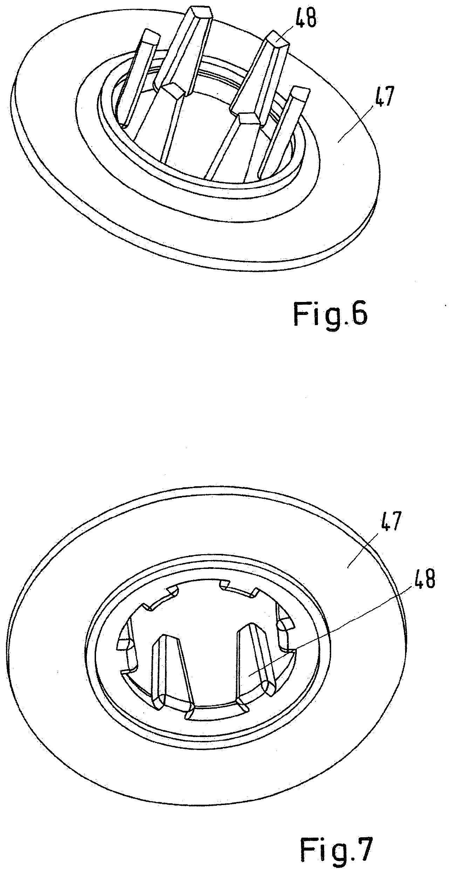

Since in this embodiment the main flow paths 44, 45 are arranged between the coil 43 and the pilot valve element 46, the axial valve 41 comprises two magnetic flux conductors 47. The magnetic flux conductors 47 are also shown in more detail in figures 6 and 7. The magnetic flux conductors 47 comprise axial extensions 48, which ensure that the magnetic flux is guided from the coil 43 to the pilot valve element 46 and back. According to the embodiment in figures 5 to 7 the magnetic flux conductors 47 comprise six axial extensions 48. Between neighboring axial extensions 48 the main flow paths 44, 45 are arranged, which allow the fluid to flow between the coil 43 and the pilot valve element 46.

In contrast to the embodiment according to figures 1 to 4, the coil 43 is arranged in a coil housing 49. The coil housing 49 can in part be formed by the magnetic flux conductors 47.

The axial valve 41 comprises an anchor member 50 comprising an anchor tube 51. In this embodiment the main closing element 52 is arranged in a common member with an armature tube 53. The armature tube 53 is on one end fixed to an armature anchor 54. The main closing element 52 moves in unison with the armature tube 53 and the armature anchor 54 when the main valve 9 is opened or closed.

The pilot valve element 46 is slideable received in the armature tube 53. In the closed position of the pilot valve 9 high pressure fluid from the inlet 3 can flow to an armature chamber 55 at a closed end of the anchor tube 51 through a bleed hole 56 between the anchor tube 51 and the armature tube 53. This high pressure fluid can then flow through a spring bore 88 in the armature anchor 54 and then through a bleed hole 57 between the pilot valve element 46 and the armature tube 53 into the pressure chamber 22.

When the coil 43 is energized, a magnetic force moves the pilot valve element 46 away from the pilot valve seat 20 towards the armature anchor 54. Low pressure fluid from the outlet 4 can then enter the pressure chamber 22 through the orifice 21. The pressure in the pressure chamber 22 consequently drops and the net pressure force on the main closing element 52 becomes larger than the force of a common spring 58 and consequently the main valve 9 opens.

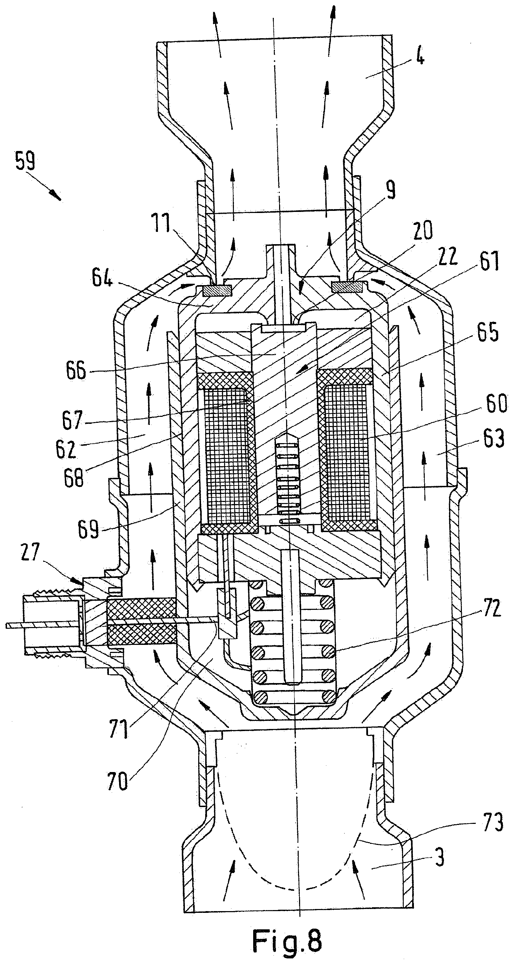

Figure 8 shows a third embodiment of an axial valve 59. As in the previous two embodiments, the axial valve 59 is normally closed when no current is provided to the coil 60 of the pilot valve 61. The coil 60 is arranged radially inside the main flow paths 62, 63 of the fluid.

The relative position of the coil 60 to a main closing element 64 is fixed. The coil 60 is arranged inside an armature tube 65. The armature tube 65 is arranged in a common member with the main closing element 64. When the main valve opens or closes, the coil 60 moves in unison with the main closing element 64. A pilot valve element 66 is arranged slideable inside a coil casing 67 of the coil 60.

Figure 8 shows the situation when both the main valve 9 and the pilot valve 61 are in a closed valve position. High pressure fluid can enter from the main flow path 62 through a bleed hole 68 between the armature tube 65 and an anchor tube 69 into an armature chamber 70. From the armature chamber 70 the high pressure fluid can then flow through further bleed holes around the coil casing 67 along the pilot valve element 66 into the pressure chamber 22.

An electric current can be provided to the coil 60 via a line 71 that is connected to a connector 27. The connector 27 is preferably a M12 connector. The line 71 in this case is flexibly attached to the coil 60 and the anchor tube 69, such that the line 71 can reposition itself if the coil 60 is displaced with the main closing element 64. When the coil 60 is provided with a current, the pilot valve element 66 is displaced away from the pilot valve seat 20 and the pressure in the armature tube 65 is reduced. Thereby, the main closing element 64 is displaced away from the main valve seat 11 together with the pilot valve 61 by the net pressure force against the force of a main valve spring 72.

Optionally, a filter 73 may be arranged in the inlet 3.

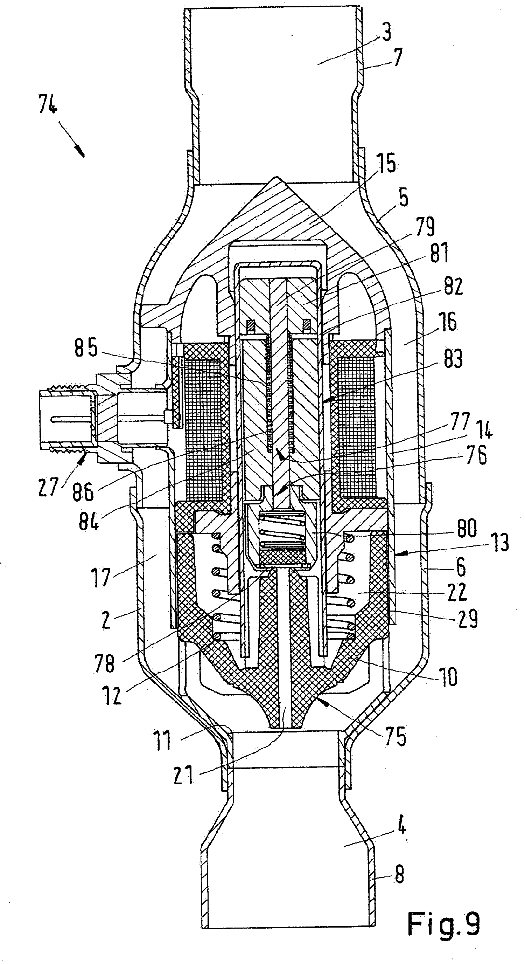

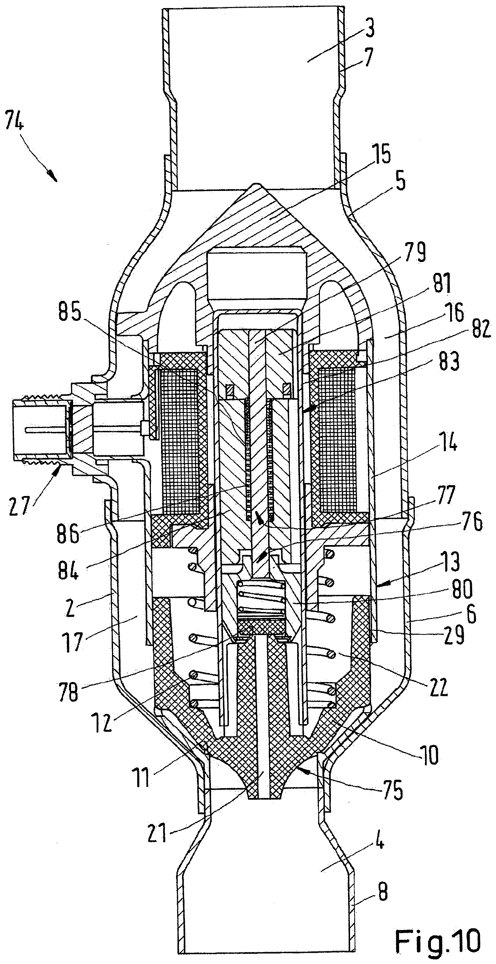

Figures 9 and 10 show a fourth embodiment of an axial valve 74. The construction of this embodiment is similar to the first embodiment according to figures 1 to 4, but in this case the axial valve 74 is a normally open valve.

The axial valve 74 here again comprises a main valve 75 and a pilot valve 76. The main valve 75 comprises a main valve element 10 as well as a main valve seat 11. The pilot valve 76 comprises a pilot valve element 77 and a pilot valve seat 78. The pilot valve element 77 here comprises a pin 79 as well as a pilot valve closing member 80 and a moveable armature 81. The pin 79 is on one end connected to the pilot valve closing member 80 and on the other end connected to the moveable armature 81. The pilot valve element 77 is received slideable inside an armature tube 82 of an armature 83. A stationary yoke 84 is fixed to the armature tube 82. The stationary yoke 84 comprises a central bore 85 in which the pin 79 is slideably received. A pilot valve spring 86 is arranged coaxially around the pin 79 inside the bore 85.

When the coil 87 is provided with an electrical current via the connector 27 the moveable armature 81 and thus the whole pilot valve element 77 is displaced towards the pilot valve seat 78. This situation is shown in figure 10 where the pilot valve 76 is in a closed position and the moveable armature 81 abuts against the stationary yoke 84. When the pilot valve 76 is closed, the pressure inside the pressure chamber 22 increases and the main valve element 10 is displaced towards the main valve seat 11 and closes the main valve 9 as shown in figure 10.

A main valve spring 12 urges the main closing element 10 towards the main valve seat 11. The main valve spring 12 on the other hand rests against an anchor member 13 arranged in the housing 2. The anchor member 13 furthermore comprises an anchor tube 14 as well as an anchor member 15. The main closing element 10 is displaceable received inside the anchor tube 14. The anchor member 13 may be connected to the housing 2 at either or both of the anchor end 15 and the anchor tube 14. Between the anchor member 13 and the housing 2 main flow paths 16, 17 are arranged, through which the fluid can flow when the main valve 9 is in an open position as shown in figure 9.

## Claims

1. An axial valve (1, 41, 59, 74) comprising a housing (2), an inlet (3), an outlet (4), a main valve (9, 75) and a pilot valve (18, 42, 61, 76), wherein the opening and closing of the main valve (9, 75) is controlled by actuating the pilot valve (18, 42, 61, 76), and wherein the pilot valve (18, 42, 61, 76) comprises a pilot valve element (19, 46, 66, 77) and an armature (24, 83), and wherein the main valve (9, 75) comprises a main closing element (10, 52, 64), wherein the pilot valve element (19, 46, 66, 77) is arranged displaceable inside the armature (24, 83) and the armature's relative position to the main closing element (10, 52, 64) is fixed, **characterized in that** the housing (2) is formed from deep drawn metal sheet parts.

2. The axial valve (1, 41, 59, 74) according to claim 1, **characterized in that**, the main valve (9, 75) and the pilot valve (18, 42, 61, 76) have parallel opening directions.

3. The axial valve (1, 41, 59, 74) according to claims 1 or 2, **characterized in that**, both the main valve (9, 75) and the pilot valve (18, 42, 61, 76) have opening directions parallel to a central axis of the housing (2) leading from inlet (3) to outlet (4).

4. The axial valve (1, 41, 59, 74) according to any of claims 1 to 3, **characterized in that**, the pilot valve element (19, 46, 66, 77) is arranged displaceable in an armature tube (23, 53, 65, 82) of the armature (24, 83) and one end of the armature tube (23, 53, 65, 82) is attached to the main closing element (10, 52, 64).

5. The axial valve (1, 41, 59, 74) according to any of claims 1 to 4, **characterized in that**, a pilot valve seat (20, 78) is arranged in the main closing element (10, 52, 64).

6. The axial valve (1, 41, 59, 74) according to any of claims 1 to 5, **characterized in that**, the main flow paths (16, 17, 44, 45, 62, 63) of the axial valve (1, 41, 59, 74) from inlet (3) to outlet (4) are located in a radial direction between the housing (2) and the armature (24, 83).

7. The axial valve (1, 41, 59, 74) according to any of claims 1 to 6, **characterized in that**, the pilot valve (18, 42, 61, 76) is a magnetic valve comprising a coil (26, 43, 60, 87).

8. The axial valve (1, 59, 74) according to claim 7, **characterized in that**, the coil (26, 60, 87) is arranged radially inside the main flow paths (16, 17, 62, 63) of the axial valve (1, 59, 74).

9. The axial valve (1, 41, 59, 74) according to claim 7 or 8, **characterized in that**, the relative position of the coil to the main closing element (10, 52, 64) is fixed.

10. The axial valve (41) according to claim 7, **characterized in that**, the coil (43) is arranged radially outside the main flow paths (44, 45) of the axial valve (41).

11. The axial valve (1, 41, 59, 74) according to any of claims 7 to 10, **characterized in that**, the axial valve (1, 41, 59, 74) comprises at least one magnetic flux conductor (47) between the coil (26, 43, 60, 87) and the pilot valve element (19, 46, 66, 77).

12. The axial valve (1, 41, 59, 74) according to claim 11, **characterized in that**, the magnetic flux conductor (47) comprises a plurality of fluid flow paths arranged between axial extensions (48) of the magnetic flux conductor (47).

13. The axial valve (1, 41, 59, 74) according to any of claims 1 to 12, **characterized in that**, the axial valve (1, 41, 59, 74) comprises an anchor member (13, 50) that is fixed to the housing (2), wherein the main closing element (10, 52, 64) is arranged slideable inside the anchor member (13, 50).

14. The axial valve (1, 41) according to claim 13, **characterized in that**, the anchor member (13, 50) comprises an anchor tube (14, 51), wherein the main closing element (10, 52, 64) is arranged slideable in the anchor tube (14, 51, 69).

## Patentansprüche

1. Axialventil (1, 41, 59, 74), das ein Gehäuse (2), einen Einlass (3), einen Auslass (4), ein Hauptventil (9, 75) und ein Steuerventil (18, 42, 61, 76) umfasst, wobei das Öffnen und Schließen des Hauptventils (9, 75) durch Betätigen des Steuerventils (18, 42, 61, 76) gesteuert wird, und wobei das Steuerventil (18, 42, 61, 76) ein Steuerventilelement (19, 46, 66, 77) und eine Armatur (24, 83) umfasst, und wobei das Hauptventil (9, 75) ein Hauptschließelement (10, 52, 64) umfasst, wobei das Steuerventilelement (19, 46, 66, 77) verschiebbar in der Armatur (24, 83) angeordnet ist und die relative Position der Armatur zum Hauptschließelement (10, 52, 64) fixiert ist, **dadurch gekennzeichnet, dass** das Gehäuse (2) aus tiefgezogenen Metallblechteilen ausgebildet ist.

2. Axialventil (1, 41, 59, 74) nach Anspruch 1, **dadurch gekennzeichnet, dass** das Hauptventil (9, 75) und das Steuerventil (18, 42, 61, 76) parallele Öffnungsrichtungen aufweisen.

3. Axialventil (1,41,59, 74) nach Anspruch 1 oder 2, **dadurch gekennzeichnet, dass** sowohl das Hauptventil (9, 75) als auch das Steuerventil (18, 42, 61, 76) eine Öffnungsrichtung aufweist, die parallel zu einer Mittelachse des Gehäuses (2), die vom Einlass (3) zum Auslass (4) führt, verläuft.

4. Axialventil (1, 41, 59, 74) nach einem der Ansprüche 1 bis 3, **dadurch gekennzeichnet, dass** das Schaltventilelement (19, 46, 66, 77) verschiebbar in einem Armaturrohr (23, 53, 65, 82) der Armatur (24, 83) angeordnet ist und ein Ende des Armaturrohrs (23, 53, 65, 82) am Hauptschließelement (10, 52, 64) befestigt ist.

5. Axialventil (1, 41, 59, 74) nach einem der Ansprüche 1 bis 4, **dadurch gekennzeichnet, dass** ein Schaltventilsitz (20, 78) im Hauptschließelement (10, 52, 64) angeordnet ist.

6. Axialventil (1, 41, 59, 74) nach einem der Ansprüche 1 bis 5, **dadurch gekennzeichnet, dass** sich die Hauptströmungswege (16, 17, 44, 45, 62, 63) des Axialventils (1, 41, 59, 74) vom Einlass (3) zum Auslass (4) in Radialrichtung zwischen dem Gehäuse (2) und der Armatur (24, 83) befinden.

7. Axialventil (1, 41, 59, 74) nach einem der Ansprüche 1 bis 6, **dadurch gekennzeichnet, dass** das Steuerventil (18, 42, 61, 76) ein Magnetventil ist, das eine Spule (26, 43, 60, 87) umfasst.

8. Axialventil (1, 59, 74) nach Anspruch 7, **dadurch gekennzeichnet, dass** die Spule (26, 60, 87) radial innerhalb der Hauptströmungswege (16, 17, 62, 63) des Axialventils (1, 59, 74) angeordnet ist.

9. Axialventil (1, 41, 59, 74) nach Anspruch 7 oder 8, **dadurch gekennzeichnet, dass** die relative Position der Spule zum Hauptschließelement (10, 52, 64) fixiert ist.

10. Axialventil (41) nach Anspruch 7, **dadurch gekennzeichnet, dass** die Spule (43) radial außerhalb der Hauptströmungswege (44, 45) des Axialventils (41) angeordnet ist.

11. Axialventil (1, 41, 59, 74) nach einem der Ansprüche 7 bis 10, **dadurch gekennzeichnet, dass** das Axialventil (1, 41, 59, 74) mindestens einen Magnetflussleiter (47) zwischen der Spule (26, 43, 60, 87) und dem Steuerventilelement (19, 46, 66, 77) umfasst.

12. Axialventil (1, 41, 59, 74) nach Anspruch 11, **dadurch gekennzeichnet, dass** der Magnetflussleiter (47) mehrere Fluidströmungswege umfasst, die zwischen axialen Verlängerungen (48) des Magnetflussleiters (47) angeordnet sind.

13. Axialventil (1, 41, 59, 74) nach einem der Ansprüche 1 bis 12, **dadurch gekennzeichnet, dass** das Axialventil (1, 41, 59, 74) ein Ankerelement (13, 50) umfasst, das am Gehäuse (2) fixiert ist, wobei das Hauptschließelement (10, 52, 64) verschiebbar im Ankerelement (13, 50) angeordnet ist.

14. Axialventil (1, 41) nach Anspruch 13, **dadurch gekennzeichnet, dass** das Ankerelement (13, 50) ein Ankerrohr (14, 51) umfasst, wobei das Hauptschließelement (10, 52, 64) verschiebbar im Ankerrohr (14, 51, 69) angeordnet ist.

## Revendications

1. Soupape axiale (1, 41, 59, 74) comprenant un boîtier (2), un orifice d'entrée (3), un orifice de sortie (4), une soupape principale (9, 75) et une soupape pilote (18, 42, 61, 76), l'ouverture et la fermeture de la soupape principale (9, 75) étant commandées par actionnement de la soupape pilote (18, 42, 61, 76) et la soupape pilote (18, 42, 61, 76) comportant un élément de soupape pilote (19, 46, 66, 77) et une armature (24, 83), et la soupape principale (9, 75) comprenant un élément principal de fermeture (10, 52, 64), l'élément de soupape pilote (19, 46, 66, 77) étant disposé de manière mobile à l'intérieur de l'armature (24, 83) et la position relative de l'armature par rapport à l'élément principal de fermeture (10, 52, 64) étant fixée, **caractérisée en ce que** le boîtier (2) étant formé de pièces en tôle métallique ayant subi un emboutissage profond.

2. Soupape axiale (1, 41, 59, 74) selon la revendication 1, **caractérisée en ce que** la soupape principale (9, 75) et la soupape pilote (18, 42, 61, 76) présentent des directions d'ouverture parallèles.

3. Soupape axiale (1, 41, 59, 74) selon les revendications 1 ou 2, **caractérisée en ce que** la soupape principale (9, 75) et la soupape pilote (18, 42, 61, 76) présentent des directions d'ouverture parallèles à un axe central du boîtier (2) allant de l'orifice d'entrée (3) à l'orifice de sortie (4).

4. Soupape axiale (1, 41, 59, 74) selon l'une quelconque des revendications 1 à 3, **caractérisée en ce que** l'élément de soupape pilote (19, 46, 66, 77) est disposé de manière mobile dans un tube d'armature (23, 53, 65, 82) de l'armature (24, 83) et une extrémité du tube d'armature (23, 53, 65, 82) est fixée sur l'élément principal de fermeture (10, 52, 64).

5. Soupape axiale (1, 41, 59, 74) selon l'une quelconque des revendications 1 à 4, **caractérisée en ce qu'**un siège de soupape pilote (20, 78) est disposé dans l'élément principal de fermeture (10, 52, 64).

6. Soupape axiale (1, 41, 59, 74) selon l'une quelconque des revendications 1 à 5, **caractérisée en ce que** les chemins d'écoulement principaux (16, 17, 44, 45, 62, 63) de la soupape axiale (1, 41, 59, 74) entre l'orifice d'entrée (3) et l'orifice de sortie (4) sont disposés radialement entre le boîtier (2) et l'armature (24, 83).

7. Soupape axiale (1, 41, 59, 74) selon l'une quelconque des revendications 1 à 6, **caractérisée en ce que** la soupape pilote (18, 42, 61, 76) est une soupape magnétique comprenant une bobine (26, 43, 60, 87).

8. Soupape axiale (1, 59, 74) selon la revendication 7, **caractérisée en ce que** la bobine (26, 60, 87) est disposée radialement à l'intérieur des chemins d'écoulement principaux (16, 17, 62, 63) de la soupape axiale (1, 59, 74).

9. Soupape axiale (1, 41, 59, 74) selon la revendication 7 ou 8, **caractérisée en ce que** la position relative de la bobine par rapport à l'élément principal de fermeture (10, 52, 64) est fixée.

10. Soupape axiale (41) selon la revendication 7, **caractérisée en ce que** la bobine (43) est disposée radialement en dehors des chemins d'écoulement principaux (44, 45) de la soupape axiale (41).

11. Soupape axiale (1, 41, 59, 74) selon l'une quelconque des revendications 7 à 10, **caractérisée en ce que** la soupape axiale (1, 41, 59, 74) comprend au moins un conducteur de flux magnétique (47) entre la bobine (26, 43, 60, 87) et l'élément de soupape pilote (19, 46, 66, 77).

12. Soupape axiale (1, 41, 59, 74) selon la revendication 11, **caractérisée en ce que** le conducteur de flux magnétique (47) comprend une pluralité de chemins d'écoulement de fluide disposés entre des extensions axiales (48) du conducteur de flux magnétique (47).

13. Soupape axiale (1, 41, 59, 74) selon l'une quelconque des revendications 1 à 12, **caractérisée en ce que** la soupape axiale (1, 41, 59, 74) comprend un élément d'ancrage (13, 50) qui est fixé au boîtier (2), l'élément principal de fermeture (10, 52, 64) étant disposé de manière coulissante dans l'élément d'ancrage (13, 50).

14. Soupape axiale (1, 41) selon la revendication 13, **caractérisée en ce que** l'élément d'ancrage (13, 50) comprend un tube d'ancrage (14, 51), l'élément principal de fermeture (10, 52, 64) étant disposé de manière coulissante dans le tube d'ancrage (14, 51, 69) .
